Europäisches Patentamt

European Patent Office

Office européen des brevets

(11) Publication number: 0 541 074 A2

# EUROPEAN PATENT APPLICATION

(21) Application number: 92118910.6

(22) Date of filing: 04.11.92

(51) Int. Cl.⁵: **C08L 71/02**, C08G 65/32, C08L 33/08, C08L 33/10, C08K 5/17

(30) Priority: 06.11.91 JP 319888/91

(43) Date of publication of application: 12.05.93 Bulletin 93/19

(84) Designated Contracting States: DE FR GB

(71) Applicant: **SUNRISE MEISEI CORPORATION** 1-4-7, Naka Hamaderaishizu-cho **Sakai Osaka, 592(JP)**

(72) Inventor: **Nakano, Yoshinori** 1-35-15, Miikedai **Sakai, Osaka 590-01(JP)** Inventor: **Taku, Tetsuro** 2-1-8-403, Chayamadai **Sakai, Osaka 590-01(JP)**

(74) Representative: **Goddar, Heinz J., Dr. et al** **FORRESTER & BOEHMERT** Franz-Joseph-Strasse 38 **W-8000 München 40 (DE)**

(54) **Non-pollution sealant compound.**

(57) Disclosed herein is a one-component sealant compound being based on a silicone-modified polyether polymer having methyl dimethoxysilyl functional groups on ends of a polyproylene oxide main chain, which is blended with a plasticizer, a filler, an adhesive additive agent and a curing catalyst, as well as a meta/acrylic component prepared by dissolving a copolymer of two or three of ethyl acrylate, propyl acrylate, butyl acrylate, methyl methacrylate, butyl methacrylate and lauryl methacrylate in a solvent and an amine component prepared by dissolving a solid long-chain primary or secondary saturated monoamine or diamine having a melting point in a range of 40 to 100°C in a solvent. The meta/acrylic component and the amine component migrate to the surface of the sealant in a curing process at a higher speed than the plasticizer to form a barrier film layer on the surface, thereby preventing the same from surface pollution.

EP 0 541 074 A2

BACKGROUND OF THE INVENTION

Field of the Invention

The present invention relates to a one-component sealant compound based on a silicone-modified polyether polymer. A sealant is filled up in a junction or clearance (hereinafter generically referred to as "joint") betweem various members of a building such as siding boards, cartain walls, sashes and the like, to provide the joint with water- and air- tightness.

Description of the Background Art

In general, one-component sealants are based on silicone, urethane, polysulfide, silicone-modified polyether and the like. The present invention is directed to a one-component sealant which is based on a silicone-modified polyether. The base polymer thereof is an organic polymer having organosiloxane, which reacts with moisture contained in the air at the ordinary temperature to be cured to form a rubber-like substance since the same has hydrolytic silicon functional groups on its ends.

In general, a one-component sealant which is based on silicone or urethane or polysulfide has a relatively small leaving tack on its surface. Such a leaving tack on the surface of a one-component sealant is mainly caused by bleeding of liquid components, particularly a plasticizer, contained in the compound. While a one-component sealant which is based on a silicone-modified polyether has a relatively large leaving tack on its surface. In the case of a one-component sealant based on a silicone-modified polyether, it is supposed that such a leaving tack also results from specificity (hereinafter referred to as specificity of the base polymer) based on irregularity in the rate of functional conversion of end silicone in the base polymer.

A silicone-modified polyether polymer is now being expelled from the market as a pollution type sealant, since such a leaving tack on the surface of a sealant promotes adhesion of dusts and pollutants to reduce the commercial value and durability of the sealant. However, a silicone-modified polyether polymer has extremely excellent characteristics and functions except the problem of the leaving tack, which must be solved as soon as possible.

In order to solve the aforementioned problem, the silicone-modified polyether polymer itself has been studied as disclosed in Japanese Patent Laying-Open Gazette No. 52-73998 (1977), but such study has not yet reached a satisfactory stage. While a pollution control primer may be adapted to protect the surface of a sealant as disclosed in Japanese Patent Laying-Open Gazettes Nos. 3-50286 (1991) and 3-86782 (1991), this method has a problem of cracking which is caused on the surface due to the passage of time, in addition to negative factors such as the long application time and the large number of application steps. Thus, neither method can serve as a deterministic countermeasure. Also when the surface of a sealant is coated with paint, pollution may be easily caused by sticking of dusts and pollutants, similarly to the uncoated surface with leaving tack. While the leaving tack resulting from the silicone-modified polyether polymer itself causes a problem on an uncoated surface of a sealant, a liquid component, particularly a plasticizer, migrating to the surface of the sealant causes a problem when the surface is coated. Namely, the paint film formed on the surface of the sealant is softened and modified by the plasticizer, to cause a secondary leaving tack. In order to solve this problem, it is necessary to select a plasticizer which will not soften and modify the paint, or to form a barrier film layer for separating the plasticizer having a migration property from the paint film thereby preventing direct contact therebetween.

When a leaving tack is caused on the surface layer of the sealant, dusts and pollutants naturally stick on the surface due to its stickiness to pollute the same, whether the surface is coated or uncoated. In general, a relatively small leaving tack is caused on a sealant which is based on silicone or urethane or polysulfide, as hereinabove described. However, a silicone-based sealant is easy to pollute due to electrostatic charge, rather than a leaving tack. While it is extremely difficult to remove dusts and pollutants from a surface having a leaving tack due to its stickiness, those sticking onto a surface caused by electrostatic charge can be relatively easily removed by watering or the like, for example, since such pollution is not sticky but dry. However, either pollution is caused on a surface. In order to prevent such pollution, therefore, it is necessary to complete design of mix which expels the factor for the leaving tack and prevents electrostatic charge.

## SUMMARY OF THE INVENTION

An object of the present invention is to provide a non−pollution sealant, being prepared from a one−component sealant compound based on a silicone−modified polyether polymer, which prevents a leaving tack and electrostatic charge, with application of a novel surface reforming method.

The present invention is not directed to design of mix for adjusting and reducing the rate of a plasticizer to a polymer for the purpose of reducing a leaving tack. If the rate of a plasticizer to a polymer is reduced, the modulus of elasticity of the sealant is so increased that it may be impossible to cope with displacement in a junction of a substrate due to reduction in elongation, leading to breakage of the substrate plane if the substrate is formed by a rather weak material such as a cellular concrete, for example. Further, the present invention is not directed to a general pollution control method of applying a sealant to a joint and then coating the surface of the sealant with a pollution control primer.

The present invention provides a novel one−component silicone−modified polyether sealant, which is characterized in that a barrier film layer is formed on the surface of the sealant by a component (hereinafter referred to as "meta/acrylic component"), having inferior compatibility with a silicone−modified polymer, being prepared by dissolving a copolymer of at least two esters selected from methacrylic esters and acrylic esters in a solvent, and another component (hereinafter referred to as "amine component"), also having inferior compatibility with a silicone−modified polyether polymer, being prepared by dissolving solid long−chain type primary or secondary saturated monoamine or diamine having a melting point in a range of 40 to 100°C in a solvent.

In particular, the amine component serves important functions of (1) preventing the surface of the cured sealant from electrostatic charge, (2) providing an oxidation preventing effect for improving aging resistance of the cured sealant, and (3) fixing paint applied to the surface of the sealant by amino groups or imino groups. These functions cannot be attained by solid wax such as paraffin wax, for example.

The specific components, i.e., the meta/acrylic component and the amine component, migrate to the surface of the sealant at a higher speed than a plasticizer in a step of curing the silicone−modified polyether polymer to form a durable barrier film layer, thereby preventing bleeding caused by specificity of the silicone−modified polyether polyer and the plasticizer while preventing pollution on the surface of the sealant whether the surface is coated or not.

The foregoing and other objects, features, aspects and advantages of the present invention will become more apparent from the following detailed description of the present invention.

## DETAILED DESCRIPTION OF THE INVENTION

A silicone−modified polyether polymer is defined as an organic polymer having organosiloxane. In more concrete terms, such a silicone−modified polyether polymer is described in Janapese Patent Laying−Open Gazette No. 52−73998 (1977), for example, and the organic polymer described in this literature can be employed as a silicone−modified polyether polymer in the present invention. A preferable silicone−modified polyether polymer has methyldimethoxysilyl functional groups on ends of a polypropylene oxide main chain.

Monomers forming a copolymer of the meta/acrylic component for forming the barrier film layer are at least two esters selected from methacrylic esters and acrylic esters. Examples of the methacrylic esters are methyl methacrylate, ethyl methacrylate, propyl methacrylate, butyl methacrylate, phenyl methacrylate, pentyl methacrylate, allyl methacrylate, hexyl methacrylate, cyclohexyl methacrylate, octyl methacrylate, lauryl methacrylate, myristyl methacrylate, palmityl methacrylate and stearyl methacrylate. On the other hand, examples of acrylic esters are methyl acrylate, ethyl acrylate, propyl acrylate, butyl acrylate, phenyl acrylate, pentyl acrylate, allyl acrylate, hexyl acrylate, heptyl acrylate, octyl acrylate, nonyl acrylate, decyl acrylate, undecyl acrylate, dodecyl acrylate, cetyl acrylate, methylpropyl acrylate, cyclohexyl acrylate, 2−methyl−1−pentyl acrylate, crotyl acrylate, 2− ethylhexyl acrylate, 5−ethyl−1−nonyl acrylate, tetradecyl acrylate, hexadecyl acrylate, myristyl acrylate, palmityl acrylate and stearyl acrylate.

The copolymer forming the meta/acrylic component is prepared by polymerizing these esters at an arbitrary mole ratio, and has dissolubility in a solvent. A particularly preferable copolymer is prepared from two or three of propyl acrylate, butyl acrylate and methyl methacrylate.

The solvent for such a copolymer is preferably prepared from an aromatic solvent having no functional groups, such as xylene or toluene, for example.

The amine component of solid long−chain alkylamine forming the barrier film layer can be prepared from primary or secondary amines expressed as $NH_2−(CH_2)_n−CH_3$, $NH_2−(CH_2)_n−NH_2$, $R−NH−(CH_2)_n−CH_3$, $R−NH−(CH_2)_n−NHR'$ or $R−NH−(CH_2)_n−NH_2$, where R and R' represent the same or different alkyl groups. The primary amines include monoamines such as tridecylamine, tetradecylamine, pentadecylamine, cetylamine, laurylamine and stearylamine, for example, and diamines such as 1,8 − diaminooctane, 1,9 − diaminononane, 1,10 − diaminodecane, 1,11 − diaminoundecane, 1,12 − diaminododecane, 1,13 − diaminotridecane, 1,14 − diaminotetradecane, 1,15 − diaminopentadecane, 1,16 − diaminohexadecane, 1,17 − diaminoheptadecane, 1,18 − diaminooctadecane, 1,19 − diamonononadecane, 1,20 − diaminoeicosane, 1,21 − diaminohenticosane, 1,22 − diaminodocosane, 1,23 − diaminotricosane and 1,24 − diaminotetracosane. The secondary amines include monoamines such as dibutylamine, diamylamine, dilaurylamine, distearylamine and methyllaurylamine, and diamines such as N,N' − dibutylethylamine, N,N' − dilaurylpropylamine, N,N' − distearylbutylamine, N − butyl − N' − laurylethylamine, N − butyl − N' − laurylpropylamine and N − lauryl − N' − stearylbutylamine. Other applicable amines are N − butylethylenediamine, N − laurylpropylenediamine and N − stearylpropylenediamine. Among these, 1,12 − diaminododecane is particularly preferable.

A solid long − chain alkylamine having a melting point in a range of 40 to 100 ˚C is effective for pollution control on the surface of the sealant. If the melting point is less than 40 ˚C, the sealant is deteriorated in heat resistance and softened by a high temperature in summertime, in particular. If the melting point exceeds 100 ˚C, on the other hand, the barrier film layer formed on the surface of the sealant is easy to harden with fragility to deteriorate elasticity, which is a basic characteristic of the sealant.

The inventive sealant compound is obtained by mixing a silicone − modified polyether polymer, a plasticizer and a filler with each other, dehydrating the same, adding and mixing an adhesive additive agent to and with the mixture, adding and mixing a metal/acrylic component and an amine component, serving as barrier film layer forming components, to and with the mixture, and adding and mixing a curing catalyst to and with the mixture in a final step.

The plasticizer can be prepared from a phthalic derivative such as ditridecyl phthalate, di − 2 − ethylhexyl phthalate, dioctyl phthalete, diisodecyl phthalate or butyl benzyl phthalate, process oil based on a paraffin group, a naphthene group or an aroma group, or alkylbenzene, for example.

The filler can be prepared from calcium carbonate, carcium magnesium carbonate, aluminum silicate, or silicon dioxide, for example.

The adhesive additive agent can be prepared from olefin functional silane, epoxy functional silane, (meta) acryl functional silane, amino functional silane, mercapto functional silane or special silane. The olefin functional silane includes vinyltrimethoxysilane, vinyltriethoxysilane and vinyltris(2 − methoxyethoxy) − silane, for example. The epoxy functional silane includes 3 − glycydoxypropyltrimethyxosilane, 3 − glycydoxypropylmethyldimethoxysilane, and 2 − (3, 4 − epoxycyclohexyl) − ethyltrimethoxysilane, for exam − ple. The (meta) acryl functional silane includes 3 − methacryloxypropyltrimethoxysilane, and 3 − methacryloxypropylmethyldimethoxysilane, for example. The amino functional silane includes N − (2 − aminoethyl) − 3 − aminopropylmethyldimethoxysilane, N − (2 − aminoethyl) − 3 − aminopropyltrimethoxysilane, 3 − aminopropyltriethoxysilane and N − (1, 3 − dimethylbutylydene) − 3 − (triethoxysilyl) − 1 − propanamine, for example. The mercapto functional silane includes 3 − mercaptopropyltrimethoxysilane and 3 − mercap − topropylmethyldimethoxysilane, for example. The special silane includes a special modified amino silane group, an epoxy amino composite silane group, an isocyanate functional silane group and a special modified isocyanate group, for axample.

The curing catalyst can be prepared from di − n − butyl tin oxide, di − n − butyl tin dichloride, di − n − octyl tin oxide or di − n − octyl tin dichloride, for example.

The one − component sealant compound which is prepared by blending a plasticizer, a filler and other necessary additives to a silicone − modified polyether polymer and further blending barrier film layer forming components of a meta/acrylic component and an amine component therewith is nonreactive and stable when the same is sealed in a container such as a cartridge, since the same is protected against moisture. When the compound is filled up in a joint of a building, however, the silicone − modified polyether polymer reacts with moisture contained in the air, to start curing. The copolymer of the meta/acrylic component and the solid long − chain alkyl − amine of the amine component selected for the present invention are inferior in compatibility with the silicone − modified polyether polymer, whereby these compo − nents migrate to the surface of the sealant at a higher speed than the plasticizer during progress of curing, to form a barrier film layer on the surface.

A barrier film layer having synergistic surface reforming effect by the aforementioned components prevents a leaving tack and electrostatic charge. Particularly the presence of the solid long − chain alkylamine serves important functions of (1) preventing the surface of the cured sealant from electrostatic charge, (2) providing an oxidation preventing effect for improving aging resistance of the cured sealant, and (3) fixing paint applied onto the surface of the sealant by amino groups or imino groups.

DESCRIPTION OF THE PREFERRED EMBODIMENTS

Example 1

100 parts by weight of a silicone − modified polyether polymer being provided with methyl dimethox − ysilyl functional groups on ends of a polypropylene oxide main chain and having molecular weight of about 7500 was blended with 50 parts by weight of a plasticizer of dioctyl phthalate, 200 parts by weight of a filler of calcium carbonate, adhesive additive agents of 1.0 parts by weight of N − (2 − aminoethyl) − 3 − aminopropylmethyldimethoxysilane and 1.0 parts by weight of N − (2 − aminoethyl) − 3 − aminopropyl − trimethoxysilane, barrier film layer forming components of 1.0 parts by weight of a copolymer containing butylester acrylate and methyl ester methacrylate in the mole ratio of 1:1 and 0.5 parts by weight of a solid long − chain alkylamine of primary diamine of 1,12 − diamino − dodecane having a melting point of 60 to 70 ˚ C, and 1.0 parts by weight of a curing catalyst of di − n − butyl tin oxide, to obtain Example 1 of a sealant compound. The barrier film layer components were dissolved in solvents, to be thereafter added to the mixture. This also applies to the following Examples.

Example 2

Example 2 of a sealing compound was prepared in a similar manner to Example 1, except that the amount of the long − chain alkylamine of 1, 12 − diaminododecane was increased to 1.0 parts by weight.

Example 3

98.5 parts by weight of a silicone − modified polyether polymer being provided with methyl dimethoxy − silyl functional groups on ends of a polyproylene oxide main chain and having molecular weight of about 8000 was belnded with 49.5 parts by weight of a plasticizer of monoalkylbenzene, 200 parts by weight of a filler of calcium carbonate, adhesive additive agents of 1.0 parts by weight of N − (2 − aminoethyl) − 3 − aminopropylmethyl − dimethoxysilane, 0.5 parts by weight of N − (2 − aminoethyl) − 3 − amino − propyl − trimenthoxysilane and 0.5 parts by weight of N − (1,3 − dimethylbutylidene) − 3 − (triethyoxysilyl) − 1 − pro − panamine, barrier film layer forming components of 0.5 parts by weight of a copolyment containing propylester acrylate, butylester acrylate and methylester methacrylate in the mole ratios of 1:1:1 and 1.0 parts by weight of a solid long − chain alkylamine of stearyl amine, and 1.0 parts by weight of a curing catalyst of di − n − butyl tin oxide, to obtain Example 3 of a sealant compound.

Example 4

50.75 parts by weight of a silicone − modified polyether polymer being provided with methyldimethox − ysilyl functional groups on ends of a polypropylene oxide main chain and having molecular weight of about 8000 and 50.75 parts by weight of such a silicone − modified polyether polymer having molecular weight of about 9000 were belnded with 46.50 parts by weight of a plasticizer of monoalkylbenzene, 200 parts by weight of a filler of calcium carbonate, adhesive additive agents of 0.7 parts by weight of N − (2 − aminoethyl) − 3 − aminopropylmethyldimethoxysilane, 0.7 parts by weight of N − (2 − aminoethyl) − 3 − aminopropyltrimethoxysilane and 1.0 parts by weight of N − (1,3 − dimethylbutylydene) − 3 − (triethoxysilyl) − 1 − propan − amine, barrier film layer forming componets of 2.0 parts by weight of a copolymer containing butylester acrylate and laurylester methacrylate in the mole ratio of 2:1 and 2.0 parts by weight of a solid long − chain alkylamine of 1,16 − diaminohexadecane and 1.0 parts by weight of a curing catalyst of di − n − butyl tin oxide, to obtain Example 4 of a sealant compound.

Example 5

50.75 parts by weight of a silicone − modified polyether polymer being provided with methyldimethox − ysilyl functionsl groups on ends of a polypropylene oxide main chain and having molecular weight of about 8000 and 50.75 parts by weight of such a silicone − modified polyether polymer having molecular weight of about 9000 were blended with 46.50 parts by weight of a plasticizer of monoalkyl benzene, 200 parts by weight of a filler of calcium carbonate, adhesive additive agents of 1.0 parts by weight of N − (2 − aminoethyl) − 3 − aminopropyltrimethoxysilane and 1.0 parts by weight of 3 − mercaptopropyltrimethox − ysilane, barrier film layer forming components of 2.0 parts by weight of a copolymer containing ethylester acrylate and butylester methacrylate in the mole ratio of 1:3 and 2.0 parts by weight of a solid long − chain

EP 0 541 074 A2

alkylamine of N,N'−dilaurylpropylamine and 1.0 parts by weight of a curing catalyst of di−n−butyl tin oxide, to obtain Example 5 of a sealant compound.

Comparative Example A

Comparative example A was prepared from a conventional sealant compound, which was prepared from the same components as Example 1, except the barrier film forming components.

Comparative Example B

Comparative example B was prepared in a similar manner to Example 1, except that the barrier film layer forming components according to the present invention were replaced by 1.0 parts by weight of paraffin wax having a melting point of 108 °C.

Table 1 shows Examples and comparative examples.

A specimen having a surface coated with paint (denoted as "coated" in Table 1) and another specimen having an uncoated surface (denoted as "uncoated" in Table 1) were prepared for each Example. An acrylic emulsion paint "Please Coat" (trade mark; Product of S K Kaken Co., Ltd.) was applied to each specimen after 24 hours from application of the sealant.

Each test piece was heated at 50 °C for seven days and thereafter inclined at about an angle of 70 degree. Then volcanic ash (200 meshes) was homogeneously distributed from above each test piece. Thereafter each test piece was brought into a vertical state for observation and evaluation of sticking state of the volcanic ash. The results of evaluation are expressed in the following marks:

◎      no sticking of volcanic ash
○      slight sticking of volcanic ash
△      sticking of volcanic ash
X      remarkable sticking of volcanic ash

Referring to Table 1, an accelerated weathering test was carried out with a dew cycle weather meter.

Comparing Examples 1 to 5 with comparative example A, it is understood possible to prevent the surface of a sealant or the surface of a paint film when the sealant is coated from pollution by blending the barrier film layer forming components according to the present invention with the silicone−modified polyether polymer, thereby improving weather resistance.

When the barrier film layer forming components are replaced by wax as shown in comparative example B, the surface of the sealant or that of the paint film cannot be prevented from pollution but such a surface is rather easy to pollute.

When about 100 parts by weight of the silicone−modified polyether polymer is blended with the barrier film forming components of 0.5 to 2.0 parts by weight of the meta/acrylic component and 1.0 to 2.0 parts by weight of the amine component as shown in Table 1, it is possible to implement sufficient pollution controllability and weather resistance. When the amine component is reduced to 0.5 parts by weight, both of pollution controllability and weather resistance are tend to reduce if the surface of the sealant is not coated, although no such problem is caused if the surface is coated. Thus, it is recognized that the amine component has the functions of preventing the surface of the sealant from charge, providing an oxidation preventing effect of improving aging resistance of the cured seaslant, and fixing the paint when the surface of the sealant is coated.

Although the present invention has been described in detail, it is clearly understood that the same is by way of illustration and example only and is not to be taken by way of limitation, the spirit and scope of the present invention being limited only by the terms of the appended claims.

The features disclosed in the foregoing description, in the claims and/or in the accompanying drawings may, both, separately and in any combination thereof, be material for realising the invention in diverse forms thereof.

Table 1

| Item | Comparative Sample A | Comparative Sample B | Comparative Sample 1 | Inventive Sample 2 | Inventive Sample 3 | Inventive Sample 4 | Inventive Sample 5 |
|---|---|---|---|---|---|---|---|
| **Blend** | | | | | | | |
| Silicone Modified Polyether | 100 | 100 | 100 | 100 | 98.5 | 101.5 | 101.5 |
| Plasticizer | 50 | 50 | 50 | 50 | 49.5 | 46.5 | 46.5 |
| Barrier Film Forming Component | | | | | | | |
|   Meta/Acrylic Component | | | 1.0 | 1.0 | 0.5 | 2.0 | 2.0 |
|   Amine Component | | | 0.5 | 1.0 | 1.0 | 2.0 | 1.0 |
| Paraffin Wax | | 1.0 | | | | | |
| Filler | 200 | 200 | 200 | 200 | 200 | 200 | 200 |
| Adhesive Additive Agent | 2.0 | 2.0 | 2.0 | 2.0 | 2.0 | 2.4 | 2.0 |
| Catalyst | 1.0 | 1.0 | 1.0 | 1.0 | 1.0 | 1.0 | 1.0 |
| **Pollution Controllability** | | | | | | | |
| Accelerated Heating Test | | | | | | | |
|   Uncoated | × | × | ○ | ◎ | ◎ | ◎ | ○ |
|   Coated | △ | △ | ◎ | ◎ | ◎ | ◎ | ◎ |
| Accelerated Weathering Test | | | | | | | |
|   Uncoated 1000Hr | △ | × | ○ | ◎ | ◎ | ◎ | ○ |
|   Uncoated 2000Hr | × | × | ○ | ◎ | ◎ | ◎ | ○ |
|   Coated 1000Hr | △ | × | ◎ | ◎ | ◎ | ◎ | ◎ |
|   Coated 2000Hr | × | × | ◎ | ◎ | ◎ | ◎ | ◎ |
| Exposure in Nature | | | | | | | |
|   Uncoated | × | × | ○ | ◎ | ◎ | ◎ | ○ |
|   Coated | × | × | ◎ | ◎ | ◎ | ◎ | ◎ |
| **Weather Resistance** | | | | | | | |
| Accelerated Weathering Test | | | | | | | |
|   Uncoated 1000Hr | Slightly Cracked | Slightly Cracked | Slightly Cracked | Uncracked | Slightly Cracked | Uncracked | Slightly Cracked |
|   2000Hr | Cracked | Cracked | Cracked | Uncracked | Cracked | Uncracked | Cracked |
|   Coated 1000Hr | Slightly Cracked Slightly Discolor | Slightly Cracked Slightly Discolor | Slightly Cracked Slightly Discolor | Color Unchanged | Color Unchanged | Color Unchanged | Color Unchanged |
|   2000Hr | Cracked Discolor | Cracked Discolor | Cracked Discolor | Uncracked Color Unchanged | Cracked Discolor | Uncracked Color Unchanged | Cracked Discolor |
| Decision on Degree of Pollution | × | × | ○ | ◎ | ◎ | ◎ | ○ |

## Claims

1. A one-component non-pollution sealant compound being based on a silicone-modified polyether polymer, characterized by containig a component prepared by dissolving a copolymer of at least two esters selected from methacrylic esters and acrylic esters in a solvent, and a component prepared by

7

dissolving a solid long−chain primary or secondary saturated monoamine, or diamine, having a melting point in a range of 40 ˚C to 100˚C in a solvent as components for forming a barrier film layer.

2. The one−component non−pollution sealant compound in accordance with claim 1, wherein said silicone−modified polyether polymer is a viscous liquid polymer having methyldimethoxysilyl functional groups on ends of a polypropylene oxide main chain.

3. The one−component non−pollution sealant compound in accordance with claim 1, wherein said copolymer of at least two esters selected from methacrylic esters and acrylic esters is a copolymer prepared by polymerizing arbitray esters selected from methyl methacrylate, ethyl methacrylate, propyl methacrylate, butyl methacrylate, phenyl methacrylate, pentyl methacrylate, ally methacrylate, hexyl methacrylate, cyclohexyl methacrylate, octyl methacrylate, lauryl methacrylate, myristyl methacrylate, palmityl methacrylate, stearyl methacrylate, methyl acrylate, ethyl acrylate, propyl acrylate, butyl acrylate, phenyl acrylate, pentyl acrylate, allyl acrylate, hexyl acrylate, heptyl acrylate, octyl acrylate, nonyl acrylate, decyl acrylate, undecyl acrylate, dodecyl acrylate, cetyl acrylate, methylpropyl acrylate, cyclohexyl acrylate, 2−methyl−1−pentyl acrylate, crotyl acrylate, 2−ethylhexyl acrylate, 5−ethyl−1−nonyl acrylate, tetradecyl acrylate, hexadecyl acrylate, myristyl acrylate, palmityl acrylate and stearyl acrylate in an arbitrary mole ratio, to have dissolubility in a solvent.

4. The one−component non−pollution sealant compound in accordance with claim 3, wherein said copolymer of at least two esters selected from methacrylic esters and acrylic esters is a copolymer composed of two or three of ethyl acrylate, propyl acrylate, butyl acrylate, methyl methacrylate, butyl methacrylate and lauryl methacrylate.

5. The one−component non−pollution sealant compound in accordance with claim 1, wherein said solid amine is at least one amine selected from those having melting points in a range of 40 ˚C to 100 ˚C and being expressed as $NH_2−(CH_2)_n−CH_3$, $NH_2−(CH_2)_n−NH_2$, $R−NH−(CH_2)_n−CH_3$, $R−NH−(CH_2)_n−NHR'$ or $R−NH−(CH_2)_n−NH_2$, where R and R' represent the same or different alkyl groups.

6. The one−component non−pollution sealant compound in accordance with claim 5, wherein said solid amine is at least one amine selected from 1,12−diaminododecane, stearyamine, 1,16−diaminohexadecane and N,N'−dilaurylpropylamine.

7. The one−component non−pollution sealant compound in accordance with claim 1, further containing a plasticizer, a filler, an adhesive additive agent and a curing catalyst.

8. The one−component non−pollution sealant compound in accordance with claim 7, wherein said plasticizer is at least one selected from alkylbenzene, process oil based on paraffin, naphthene or aroma group, and phthalic derivatives such as ditridecyl phthalate, di−2−ethylhexyl phthalate, dioctyl phthalate, diisodecyl phthalate and butylbenzyl phthalate.

9. The one−component non−pollution sealant compound in accordance with claim 7, wherein said filler is at least one selected from calcium carbonate, calcium magnesium carbonate, aluminum silicate and silicon dioxide.

10. The one−component non−pollution sealant compound in accordance with claim 7, wherein said adhesive additive agent is at least one selected from olefin functional silane, epoxy functional silane, (meta) acryl functional silane, amino functional silane, mercapto functional silane and special silane.

11. The one−component non−pollution sealant compound in accordance with claim 7, wherein said curing catalyst is at least one selected from di−n−butyl tin oxide, di−n−butyl tin dichloride, di−n−octyl tin oxide and di−n−octyl tin dichloride.

12. A one−component one−component non−pollution sealant compound being based on a silicone−modified polyether polymer, containing a component prepared by dissolving 0.5 to 2.0 parts by weight of a copolymer of at least two ester selected from methacrylic esters and acrylic esters in a solvent

EP 0 541 074 A2

and, another component prepared by dissolving 0.5 to 2.0 parts by weight of solid long−chain primary or secondary saturated mono− or diamine having a melting point in a range of 40 ˚C to 100˚C in a solvent with respect to 100 parts by weight of said silicone−modified polyether polymer as components for forming a barrier film layer.

13. The one−component non−pollution sealant compound in accordance with claim 12, wherein
said silicone−modified polyether polymer is provided with methyl dimethoxysilyl functional groups on ends of a polypropylene oxide main chain and has molecular weight of about 7500, 100 parts by weight of said silicone−modified polyether polymer being blended with:
1.0 parts by weight of a copolymer prepared by mixing butylester acrylate and methylester methacrylate in the mole ratio of 1:1 for serving as a barrier film layer forming component,
1.0 parts by weight of 1,12−diaminododecane as solid long−chain alkyl amine for serving as a barrier film layer forming component,
50 parts by weight of dioctyl phthalate for serving as a plasticizer,
200 parts by weight of calcium carbonate for serving as a filler,
1.0 parts by weight of N−(2−aminoethyl)−3−aminopropyl−methylmethoxysilane and 1.0 parts by weight of N−(2−aminoethyl)−3−aminopropyltrimethyoxysilane for serving as adhesive additive agents, and
1.0 parts by weight of di−n−butyl tin oxide for serving as a curing catalyst.

14. The one−component non−pollution sealant compound in accordance with claim 12, wherein
said silicone−modified polyether polymer is a mixture of those both being provided with methyl dimethoxysilyl functional groups on ends of polypropylene oxide main chain and having molecular weight of about 8000 and that of about 9000 respectively, 100 parts by weight of said silicone−modified polymer being blended with:
2.0 parts by weight of a copolymer prepared by mixing butylester acrylate and laurylester methacrylate in the mole ratio of 2:1 for serving as a barrier film layer forming component,
2.0 parts by weight of 1,16−diaminohexadecane as solid long−chain alkyl amine for serving as a barrier film layer forming component,
46 parts by weight of monoalkylbenzene for serving as a plasticizer,
200 parts by weight of calcium carbonate for serving as a filler,
0.7 parts by weight of N−(2−aminoethyl)−3−amino−propylmethylmethoxysilane, 0. 7 parts by weight of N−(2−aminoethyl)−3−aminopropyltrimethoxysilane and 1.0 parts by weight of N−(1,3−dimethylbutylidene)−3−(triethoxysilyl)−1−propanamine for serving as adhesive additive agents, and
1.0 parts by weight of di−n−butyl tin oxide for serving as a curing catalyst.

9